# EUROPEAN PATENT APPLICATION

(11) **EP 4 550 026 A1**
(43) Date of publication of application: **07.05.2025**
(21) Application number: 23830741.7
(22) Date of filing: 16.03.2023
(51) Int. Cl.: G02B 27/01, B60K 35/00, G02B 5/18

(54) **IMAGE DISPLAY DEVICE AND OPTICAL SYSTEM**

(30) Priority: 29.06.2022 JP 2022104930
(71) Applicant: Panasonic Intellectual Property Management Co., Ltd., Osaka-shi, Osaka 540-6207 (JP)
(72) Inventor: MINAMI, Kazuhiro, Osaka 571-0057 (JP); KUZUHARA, Satoshi, Osaka 571-0057 (JP)
(74) Representative: Eisenführ Speiser
(86) International application number: PCT/JP2023/010413
(87) International publication number: WO 2024/004287

(57) **Abstract**

An image display device (2) for causing an optical image to be visible including: a display configured to emit image light visible as the optical image; and a light guide (13) configured to guide the image light from the display to an outside. The light guide has a pair of principal surfaces (13a, 13b) facing each other. The light guide includes: an incident region (21) configured to diffract the image to propagate inside the light guide by reflection between the pair of principal surfaces, in response to incidence of the image light from the display; and an expansion region (23) configured to diffract the propagated image light to emit the diffracted image light as a plurality of beams of image light from a plurality of positions each where the image light propagates in the light guide. The image light propagated to the expansion region has a first polarization state polarized along a direction parallel or perpendicular to a plane including a normal direction of the principal surface in the expansion region and a propagation direction of the propagated image light by setting the image light incident on the incident region to have a second polarization state different from the first polarization state.

## Description

### TECHNICAL FIELD

The present disclosure relates to an image display device for making an optical image, such as a virtual image, visible to an observer, and an optical system used in the image display device.

### BACKGROUND ART:

Patent Document 1 discloses an optical display system including a plurality of diffractive optical elements (DOE) for pupil expansion in a head-mounted display (HMD) device or the like of virtual reality or mixed reality. In this optical display system, a main beam from an imager propagates from a first DOE to a second DOE as a TM polarized beam, a TE polarized beam, or the like. The second DOE includes a grating feature configured to rotate the state of polarization of the optical perturbation in addition to performing pupil expansion of the optical beam. In such a second DOE, light interference is reduced by rotating the polarized light of the perturbation beam so as to be orthogonal to the polarized light of the main beam used for image display.

### Patent Document

Patent Document 1: US 9,946,072 B2

### SUMMARY

The present disclosure provides an image display device and an optical system capable of suppressing variation in image quality in an image display device for causing a virtual image to be visible.

An image display device in the present disclosure is an image display device for causing an optical image to be visible, the image display device including: a display configured to emit image light visible as the optical image; and a light guide configured to guide the image light from the display to an outside. The light guide has a pair of principal surfaces facing each other. The light guide includes: an incident region configured to diffract the image light to propagate inside the light guide by reflection between the pair of principal surfaces, in response to incidence of the image light from the display; and an expansion region configured to diffract the propagated image light to emit the diffracted image light as a plurality of beams of image light from a plurality of positions each where the image light propagates in the light guide. The image light propagated to the expansion region has a first polarization state by setting the image light incident on the incident region to have a second polarization state, the first polarization state being polarized along a direction parallel or perpendicular to a plane including a normal direction of the principal surface in the expansion region and a propagation direction of the propagated image light, the second polarization state being different from the first polarization state.

An optical system in the present disclosure includes: a light guide configured to guide image light from a display to an outside thereof, the display configured to emit the image light visible as an optical image; and a polarization adjuster arranged between the display and the light guide. The light guide has a pair of principal surfaces facing each other. The light guide includes: an incident region configured to diffract the image light to propagates inside the light guide by reflection between the pair of principal surfaces, in response to incidence of the image light from the display; and an expansion region configured to diffract the propagated image light to emit the diffracted image light as a plurality of beams of image light from a plurality of positions each where the image light propagates in the light guide. The polarization adjuster is configured to cause the image light propagated to the expansion region to have a first polarization state by setting the image light incident on the incident region to have a second polarization state, the first polarization state being polarized along a direction parallel or perpendicular to a plane including a normal direction of a principal surface in the expansion region and a propagation direction of the propagated image light, the second polarization state being different from the first polarization state.

According to the image display device and the optical system of the present disclosure, it is possible to suppress the variation in the image quality in the image display device for causing a virtual image to be visible.

### BRIEF DESCRIPTION OF DRAWINGS

Fig. 1 is a diagram for explaining an outline of a head-up display system according to a first embodiment of the present disclosure;
Fig. 2 is a diagram illustrating a configuration of the head-up display system according to the first embodiment;
Fig. 3 is a plan view illustrating a configuration example of a light guide in the image display device of the first embodiment;
Fig. 4 is a diagram for explaining operation of pupil expansion in the image display device of the first embodiment;
Figs. 5A to 5C are diagrams illustrating a polarization state in the image display device of the first embodiment;
Figs. 6A to 6C are diagrams for explaining stability of a polarization state of propagated light in the light guide;
Fig. 7 is a graph illustrating a relation between a polarization state of propagated light and diffraction efficiency;
Fig. 8 is a diagram illustrating an example of a simulation result in a case where the polarization state of the propagated light is unstable;
Fig. 9 is a diagram illustrating an example of a simulation result in a case where the polarization state of the propagated light is stable;
Fig. 10 is a diagram illustrating another example of a simulation result in a case where the polarization state of the propagated light is unstable;
Fig. 11 is a diagram illustrating another example of a simulation result in a case where the polarization state of the propagated light is stable;
Fig. 12 is a diagram illustrating a relation between a diffraction pitch and diffraction efficiency in a first expansion region; and
Fig. 13 is a diagram illustrating a relation between a diffraction pitch and diffraction efficiency in a second expansion region.

### DETAILED DESCRIPTION

Embodiments will be described in detail below with reference to the drawings as appropriate. However, unnecessarily detailed description may be omitted. For example, a detailed description of already well-known matters and an overlapping description for substantially the same configuration may be omitted. This is to avoid the following description from becoming unnecessary redundant and to facilitate understanding by those skilled in the art.

In addition, the applicant(s) provides the accompanying drawings and the following description to enable those skilled in the art to sufficiently understand the present disclosure, which does not intend to limit the claimed subject matter.

### (First Embodiment)

Hereinafter, a first embodiment of the present disclosure will be described with reference to the drawings. In the present embodiment, an example of a system to which a pupil expansion type image display device and an optical system are applied will be described.

### 1. Configuration

### 1-1. System Outline

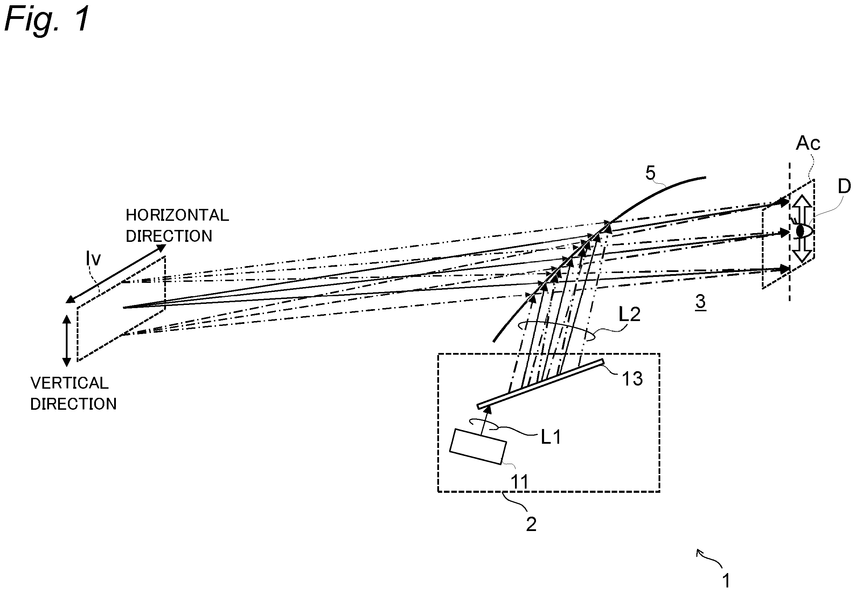

Fig. 1 is a diagram for describing an outline of a head-up display (HUD) system 1 according to the present embodiment. For example, as illustrated in Fig. 1, the HUD system 1 includes an image display device 2 and a windshield 5. The HUD system 1 is a system that allows an observer D such as a passenger to view a virtual image Iv as an example of an optical image in a vehicle 3 or the like provided with the windshield 5, for example. In the HUD system 1, a region where the virtual image Iv can be viewed by the observer D when the eyes of the observers D are located is referred to as a viewing region Ac.

For example, as illustrated in Fig. 1, the image display device 2 of the present embodiment includes a display 11 that generates image light L1 to be visible as the virtual image Iv, and a light guide 13 that expands a pupil (e.g., an exit pupil) of the image light L1 from the display 11 and guides image light L2 thus expanded to the windshield 5. Such a pupil expansion type image display device 2 can facilitate to provide largely the viewing region Ac in the HUD system 1.

In a case where the pupil expansion technology is applied to the HUD, a problem is found that for example, when the observer D moves the eyes in the viewing region Ac, luminance unevenness such as a change in brightness of the virtual image Iv is remarkable, and the image quality varies. Therefore, in order to solve the problem of the luminance unevenness and suppress the variation in the image quality, the present embodiment provides a configuration for controlling the polarization in the pupil expansion type image display device 2 is adopted. A configuration of the image display device 2 in the HUD system 1 of the present embodiment will be described below.

### 1-2. System Configuration

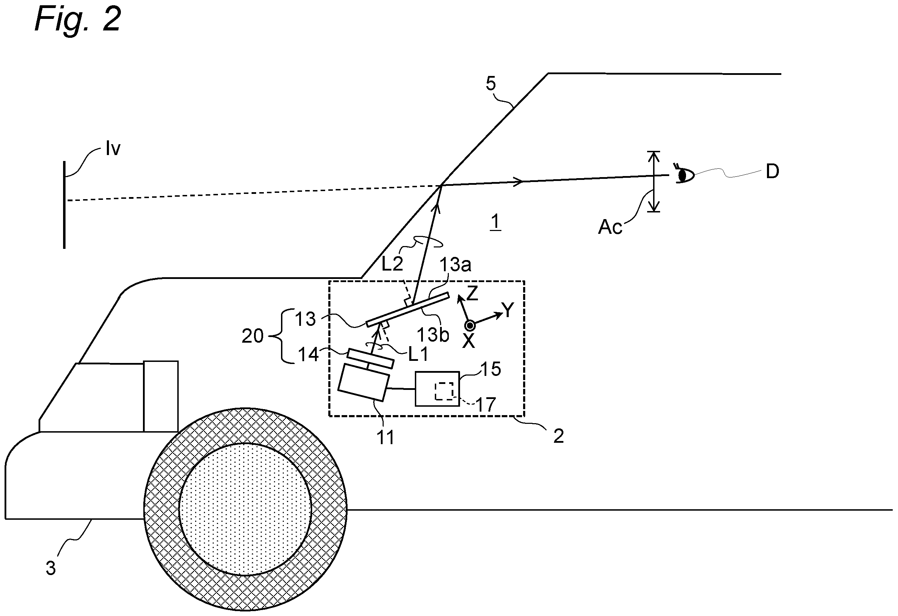

Fig. 2 illustrates a configuration of the HUD system 1 according to the present embodiment. In the HUD system 1, the image display device 2 is arranged, for example, inside a dashboard (not shown) below the windshield 5 in the vehicle 3. As illustrated in Fig. 2, for example, the image display device 2 of the present embodiment includes the display 11, the light guide 13, a polarization adjuster 14, and a controller 15. The optical system 20 including the light guide 13 and the polarization adjuster 14 is an example of an optical system in the image display device 2 of the present embodiment.

The windshield 5 is an example of a light-transmitting member provided on a moving body such as the vehicle 3. The light-transmitting member of the HUD system 1 is not limited to the windshield 5, and may be various members having light transmissivity in a visible light region, such as a combiner.

The display 11 is, for example, a display element that has a display surface for displaying an image with a plurality of pixels and generates the image light L1 indicating an image on the display surface. For example, the display 11 includes a liquid crystal display, an organic light-emitting diode display, a liquid crystal on silicon (LCOS), a digital mirror device (DMD), a micro LED, or a scanning MEMS mirror.

The display 11 may not have a display surface therein. A display surface such as a screen may be provided outside the display 11. The display 11 may include various light sources such as a laser light source or an LED light source that emits a single color or a plurality of colors for generating the image light L1. The image light L1 includes, for example, a light flux having a divergence angle corresponding to the angle of view of the image. For such various light fluxes, a light ray optical path such as a center light ray is appropriately illustrated in the drawing.

The light guide 13 is a light waveguide member formed of a transparent material in the visible light region, and configured such that incident light can be totally reflected inside. The light guide 13 has a pair of principal surfaces 13a and 13b facing each other. The shape of the light guide 13 is not limited to a planar shape, and may be a curved shape. Hereinafter, a configuration example of the light guide 13 in which the first principal surface 13a and the second principal surface 13b have a parallel planar shape will be described. Although one light guide 13 is illustrated in Fig. 2, the image display device 2 may include a plurality of light guide bodies 13. For example, the light guide 13 for each color of RGB may be used.

The light guide 13 is formed of, for example, a plate made of glass or resin in which surfaces such as the principal surfaces 13a and 13b are mirror-finished. Hereinafter, a normal direction of the principal surfaces 13a and 13b of the light guide 13 is defined as a Z direction, and two directions parallel to the principal surfaces 13a and 13b and orthogonal to each other are defined as X and Y directions. The X direction corresponds to the horizontal direction of the virtual image Iv, and the Y direction corresponds to the vertical direction of the virtual image Iv.

For example, the light guide 13 is arranged with the first principal surface 13a on the -Z side being directed downward and the second principal surface 13b on the +Z side being directed upward in the vehicle 3. The light guide 13 is inclined and arranged in the vehicle 3 as illustrated in Fig. 2, for example, according to various arrangement constraints. For example, the arrangement constraint of the light guide 13 is that no reflected light caused when sunlight or the like enters the light guide 13 from the outside of the vehicle 3 through the windshield 5 reaches the viewing region Ac.

In the image display device 2 of the present embodiment, the light guide 13 is configured such that the image light L1 incident from the display 11 on the -Z side and the image light L2 emitted to the windshield 5 on the +Z side are inclined in the Y direction with respect to the normal of each of the principal surfaces 13a and 13b. In the image display device 2 of the present embodiment, the light guide 13 is provided with a diffraction structure for realizing operation of the pupil expansion. Details of the configuration of the light guide 13 will be described later.

The polarization adjuster 14 includes, for example, various optical elements arranged between the display 11 and the light guide 13, and sets the image light L1 incident on the light guide 13 from the display 11 to a specific polarization state. For example, the polarization adjuster 14 includes one or more optical elements of a half-wave plate, a 1/4 wave plate, and a polarizing plate. The polarization adjuster 14 may be incorporated in various optical systems such as a collimator provided between the display 11 and the light guide 13, or may be configured integrally with the display 11 or the light guide 13.

The image display device 2 may not include the optical element as the polarization adjuster 14. For example, in a case where the display 11 generates the image light L1 in a predetermined polarization state such as linear polarization by a laser light source or the like, the function of the polarization adjuster 14 may be realized by alignment between the display 11 and the light guide 13 such as rotation of the image light L1 in the optical axis direction.

The controller 15 controls the whole operation of the image display device 2, for example. The controller 15 can be implemented by a circuit including a semiconductor element or the like. The controller 15 can be configured by, for example, a microcomputer, a CPU, an MPU, a GPU, a DSP, an FPGA, or an ASIC. The controller 15 reads data and programs stored in an internal memory or the like and performs various arithmetic processing to realize a predetermined function. Furthermore, the controller 15 includes a storage device 17 such as an internal memory. The controller 15 may be an external configuration of the image display device 2.

The storage device 17 is a storage medium that stores programs and data necessary for implementing the functions of the controller 15. The storage device 17 can be implemented by, for example, a hard disk (HDD), an SSD, a RAM, a DRAM, a ferroelectric memory, a flash memory, a magnetic disk, or a combination thereof. The storage device 17 stores a plurality of beams of image data representing the virtual image Iv. For example, the storage device 17 stores data of image content for causing the display 11 to display various information such as a road guidance display, a distance to a vehicle ahead, a remaining battery level of the vehicle, and a current vehicle speed. The storage device 17 is not limited to the internal memory of the controller 15, and may be an external configuration of the controller 15.

### 1-3. Light guide

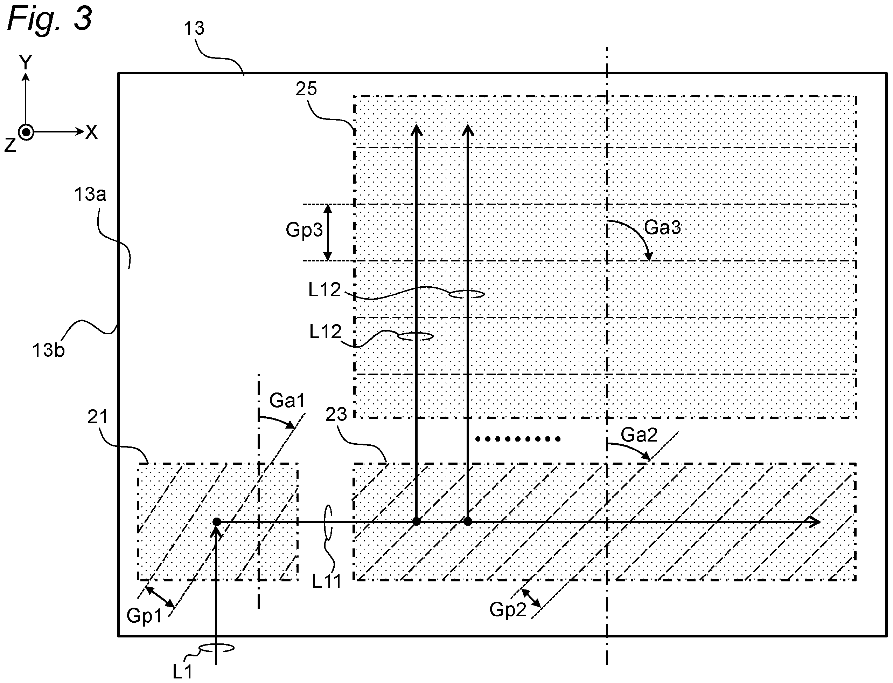

Details of the configuration of the light guide 13 in the image display device 2 of the present embodiment will be described with reference to Fig. 3. Fig. 3 is a plan view illustrating a configuration example of the light guide 13 in the image display device 2.

In the pupil expansion type image display device 2 according to the present embodiment, the light guide 13 includes a coupling region 21, a first expansion region 23, and a second expansion region 25 as illustrated in Fig. 3, for example. Each of the regions 21, 23, and 25 constitutes a diffraction structure element by providing a diffraction structure for realizing each diffraction power in the light guide 13. In the light guide 13 of the configuration example of Fig. 3, the first expansion region 23 is arranged on the +X side of the coupling region 21, and the second expansion region 25 is arranged on the +Y side of the first expansion region 23.

The diffraction structure of each of the regions 21, 23, and 25 in the light guide 13 can be configured by various periodic structures capable of realizing diffraction of light, such as a volume hologram or a diffraction grating. Hereinafter, a configuration example in which each diffraction structure of the light guide 13 is provided by a volume hologram between the first and second principal surfaces 13a and 13b will be described. The volume hologram is configured by, for example, a periodic refractive index distribution in the dielectric film such as an interference fringe formed inside the light guide 13. For example, each of the regions 21, 23, and 25 may be a three-dimensional region in the light guide 13.

The coupling region 21 is an example of an incident region that diffracts the incident image light L1 so as to be optically coupled with the image light L1 from the display 11 in the light guide 13. The optical coupling is a state in which the light incident on the coupling region 21 satisfies the total reflection condition and propagates inside the light guide 13. For example, diffraction power for performing redirection from of the incident image light L1 into image light L11 (hereinafter, also referred to as "propagated light L11") propagating in the X direction toward the first expansion region 23 is set in the coupling region 21.

For example, as illustrated in Fig. 3, the diffraction structure of the coupling region 21 has a diffraction pitch Gp1 and an inclination angle Ga1 for realizing the above-described diffraction power. The diffraction pitch Gp1 indicates a period of a diffraction structure such as a period of an interference fringe in a hologram. The inclination angle Ga1 indicates, for example, an inclination of the direction in which the interference fringes extend with respect to a predetermined reference direction (e.g., the Y direction). For example, in the example of Fig. 3, a negative (i.e., clockwise) inclination angle Ga1 is set on the XY plane in accordance with the direction in which the image light L1 is incident from the display 11 being inclined to the -Y side from the Z direction of the normal line of the coupling region 21.

The first expansion region 23 is a region that performs diffraction for expanding the image light L11 (i.e., the propagated light L11) propagated by total reflection between the principal surfaces 13a and 13b of the light guide 13 in a first propagation direction. The expansion of the image light L11 is performed by dividing and duplicating the light flux of the image light L11 by a plurality of times of diffraction and emitting the image light L12 of a plurality of light fluxes. The image light L12 of each light flux divided at this time is hereinafter referred to as "divided light L12".

For example, as illustrated in Fig. 3, the first expansion region 23 is set to have diffraction power for emitting each divided light L12, which is diffracted from the propagated light L11 with the X direction as the first propagation direction, to the second expansion region 25 in the Y direction as a second propagation direction. The diffraction structure of the first expansion region 23 has a diffraction pitch Gp2 and an inclination angle Ga2 for realizing relatively large diffraction power as described above. The diffraction pitch Gp2 of the first expansion region 23 is narrower than the diffraction pitch Gp1 of the coupling region 21, for example. The inclination angle Ga2 of the diffraction structure of the first expansion region 23 is, for example, a negative value similarly to the inclination angle Ga1 of the diffraction structure of the coupling region 21, and is, for example, an angle larger than the inclination angle Ga1.

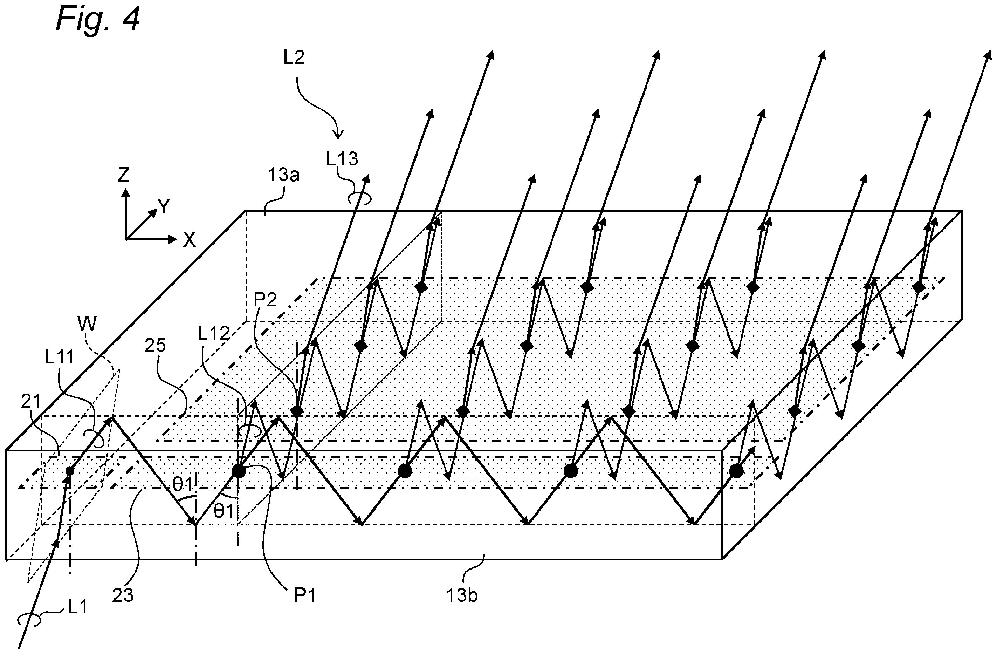

The second expansion region 25 is a region that performs diffraction for expanding the propagating image light L12 in the second propagation direction intersecting the first propagation direction. The first and second propagation directions are not limited to the X and Y directions, and may cross each other or may not be orthogonal to each other. When the image light L12 is expanded in the second propagation direction in the second expansion region 25, the image light of each light flux divided and duplicated is hereinafter also referred to as "duplicated light" (not illustrated in Fig. 3). The duplicated light of the plurality of light fluxes constitutes the image light L2 as the expansion result (see Fig. 4).

For example, the second expansion region 25 is set to have diffraction power for emitting the duplicated light, which is diffracted from the image light L12 totally reflected inside the light guide 13 so as to propagate in the Y direction, to the outside without satisfying the total reflection condition (see Fig. 4). As the diffraction power of the second expansion region 25 is smaller than the diffraction power of the first expansion region 23 described above, a diffraction pitch Gp3 of the second expansion region 25 is wider than the diffraction pitch Gp2 of the first expansion region 23, for example. **In** the diffraction structure of the second expansion region 25, for example, the inclination angle Ga3 indicates an inclination orthogonal to the second propagation direction (Y direction) and extends in the first propagation direction (X direction).

An example of the configuration of the light guide 13 in the image display device 2 of the present embodiment has been described above. The light guide 13 is not limited to the above configuration example, and various configurations can be adopted. For example, the diffraction structure of each of the regions 21, 23, and 25 in the light guide 13 is not limited to the volume hologram, and may be configured by a diffraction grating or the like. The diffraction structure of each of the regions 21, 23, and 25 may be provided on the first or second principal surfaces 13a and 14b in the light guide 13.

**In** Fig. 3, the inclination angles Ga1 to Ga3 in the XY plane are illustrated for the diffraction structure of each of the regions 21, 23, and 25. The diffraction structure of each of the regions 21, 23, and 25 is not particularly limited thereto, and may be inclined in various planes including, for example, the Z direction.

### 2. Operation

Operations of the HUD system 1 and the image display device 2 configured as described above will be described below.

In the HUD system 1 (Fig. 2), the controller 15 of the image display device 2 determines the virtual image Iv to be displayed on the basis of various information such as a travel environment acquired in the vehicle 3, for example. The controller 15 reads the image data of the determined virtual image Iv from the storage device 17 and outputs the image data to the display 11. The display 11 generates the image light L1 indicating an image under the control of the controller 15 and emits the generated image light L1.

In the image display device 2 of the present embodiment, the image light L1 from the display 11 is incident on the coupling region 21 of the light guide 13, with setting to a specific polarization state in the polarization adjuster 14, for example. In the light guide 13, the incident image light L1 is two-dimensionally divided and duplicated by the operation of pupil expansion in the first and second expansion regions 23 and 25 (details will be described later). The image light L2 thus expanded is emitted from the light guide 13 to the windshield 5.

In the HUD system 1, the image light L2 incident on the windshield 5 is reflected and projected on the viewing region Ac. The observer D can view the image light L2 projected from the HUD system 1 as the virtual image Iv by positioning the eyes in the viewing region Ac.

As described above, the HUD system 1 displays the virtual image Iv so as to be superimposed on the real view visible through the windshield 5. According to the pupil expansion type image display device 2, as the image light L2 including a plurality of duplication results is projected on the viewing region Ac, the observer D can view the virtual image Iv even if the position of the eyes is shifted as long as within the viewing region Ac.

### 2-1. Operation of Pupil Expansion

Operation of pupil expansion in the image display device 2 of the present embodiment will be described with reference to Fig. 4. Fig. 4 is a perspective view of the light guide 13 of the image display device 2, and illustrates optical paths such as center rays of various beams of image light L1, L11 to L13, and L2.

In the image display device 2 of the present embodiment, the image light L1 from the display 11 is incident on the light guide 13, having inclination toward the Y direction with respect to the Z direction of the normal line from the second principal surface 13b of the light guide 13, in the polarization state set by the polarization adjuster 14, for example. For example, the incident image light L1 is refracted by the light guide 13 to reach the diffraction structure of the coupling region 21. When the diffraction structure of the coupling region 21 is provided on the second principal surface 13b, the image light L1 enters the diffraction structure of the coupling region 21 before refraction in the light guide 13.

The diffraction structure of the coupling region 21 diffracts the image light L1 to optically couple with the incident image light L1. The image light L11 after the diffraction of the coupling region 21 is redirected into the propagated light L11 propagating in the X direction toward the first expansion region 23. According to diffraction in the coupling region 21, the propagated light L11 has an incident angle θ1 equal to or larger than a critical angle which is a minimum angle at which total reflection occurs in Fresnel reflection of the light guide 13 with respect to, for example, a normal (Z direction) of each of the principal surfaces 13a and 13b in the first expansion region 23 of the light guide 13.

The propagated light L11 from the coupling region 21 propagates in the X direction every time it is reflected between the first and second principal surfaces 13a and 13b of the light guide 13 in the first expansion region 23, and thus passes through a plurality of positions P1 arranged in the X direction in the diffraction structure of the first expansion region 23. In Fig. 4, four diffraction positions P1 in the first expansion region 23 are illustrated, but the number of diffraction positions P1 is not particularly limited. In the example of Fig. 4, the passing position from the -Z side to the +Z side is the diffraction position P1, but additionally to or alternatively, the passing position from the +Z side to the -Z side may be the diffraction position P1.

The diffraction structure of the first expansion region 23 divides a part of the propagated light L11 as the divided light L12 at each diffraction position P1, and sequentially diffracts the propagated light L11 such that the divided light L12 propagates in the Y direction toward the second expansion region 25. Accordingly, the image light L1 can be expanded in the X direction by the plurality of beams of divided light L12 arranged in the X direction and divided and duplicated from the propagated light L11 in the first expansion region 23.

According to the diffraction in the first expansion region 23, the divided light L12 has an incident angle equal to or larger than the critical angle of the light guide 13 with respect to the normal (Z direction) of each of the principal surfaces 13a and 13b of the light guide 13 in the second expansion region 25, for example. The plurality of beams of divided light L12 from the first expansion region 23 pass through the plurality of positions P2 arranged in the Y direction in the second expansion region 25 by repetition of reflection in the light guide 13 during propagation in the Y direction. In Fig. 4, three diffraction positions P2 are illustrated per one divided light L12, but the number of diffraction positions P2 is not particularly limited.

The diffraction structure of the second expansion region 25 sequentially diffracts each divided light L12 so as to further divide a part of each divided light L12 at each diffraction position P3 and emit the divided light L12 to the outside of the light guide 13 as the duplicated light L13 indicating the result of the division duplication. Accordingly, the image light L1 can be expanded in the Y direction by the plurality of duplicated light L13 arranged in the Y direction, which is obtained for each divided light L12 in the second expansion region 25.

According to the action of pupil expansion in two directions in the first and second expansion regions 23 and 25, the image light L2 expanded in the X and Y directions can be obtained. According to diffraction in the second expansion region 25, the duplicated light L13 has an incident angle less than the critical angle of the light guide 13 with respect to the normal line (Z direction) of the first principal surface 13a of the light guide 13 in the second expansion region 25, for example.

As described above, according to operation of the pupil expansion in the image display device 2 of the present embodiment, the light flux of the image light L1 from the display 11 can be expanded to the light flux of the image light L2 including the plurality of duplicated light L13 duplicated by diffraction in the first and second expansion regions 23 and 25 of the light guide 13.

### 2-2. Polarization Control

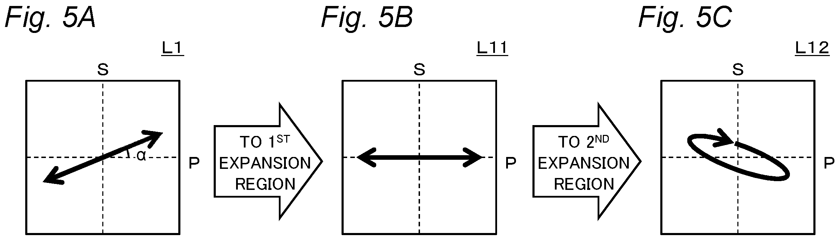

In operation of the pupil expansion as described above, control of the polarization state in the image display device 2 of the present embodiment will be described with reference to Figs. 5A to 5C.

Figs. 5A to 5C are graphs illustrating polarization states in the image display device 2 of the present embodiment. The horizontal axis of each graph corresponds to P-polarization, and the vertical axis corresponds to S-polarization. The P-polarization is a polarization state of linear polarization in which the direction of the electric field of the light with respect to the plane of incidence is parallel, and the S-polarization is a polarization state of linear polarization in which the direction of the electric field is perpendicular. The plane of incidence is a plane defined parallel to the light beam direction before and after the light is incident.

Fig. 5A illustrates a polarization state of the image light L1 incident on the coupling region 21 in the image display device 2 of the present embodiment. The polarization state of the image light L1 when entering the coupling region 21 is defined by, for example, a plane W (Fig. 4) including the center rays of the beams of image light L1 and L11 before and after diffraction in the coupling region 21 as an plane of incidence.

Fig. 5B illustrates a polarization state of the propagated light L11 in the first expansion region 23 from the image light L1 of Fig. 5A. The polarization state of the propagated light L11 is defined using the XZ plane as an plane of incidence regarding propagation to the first expansion region 23, for example (see Fig. 4). As propagation to the first expansion region 23 is based on reflection on each of the principal surfaces 13a and 13b orthogonal to the plane of incidence in the first expansion region 23, the polarization state of the propagated light L11 can be specified using each of the principal surfaces 13a and 13b.

In the examples of Figs. 5A to 5C, the image display device 2 of the present embodiment sets the polarization state of the propagated light L11 in the first expansion region 23 to P-polarization as illustrated in Fig. 5B. The polarization state of the propagated light L11 deviates from the polarization state of the image light L1 as a redirection source due to diffraction such as redirection from the image light L1 to the propagated light L11 in the coupling region 21.

Therefore, as exemplified in Figs. 5A and 5B, the image display device 2 of the present embodiment controls the polarization state of the propagated light L11 in the first expansion region 23 by setting the polarization state of the image light L1 to be shifted from the P-polarization or the like. According to this, the image display device 2 of the present embodiment can suppress the variation in the diffraction efficiency from the propagated light L11 to the divided light L12 in the first expansion region 23, and the problem of the luminance unevenness can be solved (details will be described later).

In the example of Fig. 5A, the polarization state of the image light L1 is set to linear polarization shifted from the P-polarization by a specific polarization angle α. For example, the polarization angle is represented by a rotation angle of a polarization direction in a plane orthogonal to an optical axis direction such as a center ray of the image light L1. The specific polarization angle α can be set in consideration of the change amount of the polarization angle before and after diffraction in the coupling region 21 in order to realize a desired polarization state of the propagated light L11 in Fig. 5B and the like.

The setting of the polarization angle α in the coupling region 21 may be performed, for example, by measuring the polarization state of the propagated light L11 with changing the polarization state of the image light L1, or may be performed on the basis of theoretical calculation. For example, the change amount can be calculated from the incident angle, the wavelength, and the polarization state at which the image light L1 enters the coupling region 21, the arrangement of the coupling region 21 and the first expansion region 23, and the refractive index, the diffraction pitch Gp1, the inclination angle Ga1, and the like of the coupling region 21.

Fig. 5C illustrates a polarization state of the divided light L12 in the second expansion region 25 from the propagated light L11 in Fig. 5B. The polarization state of the divided light L12 is defined using, for example, the YZ plane as an plane of incidence regarding propagation to the second expansion region 25. The polarization state of the duplicated light L13 is also defined using the YZ plane as an plane of incidence related to diffraction in the second expansion region 25.

In the example of Fig. 5C, the polarization state of the divided light L12 varies from the linear polarization of Fig. 5B to the elliptical polarization. The polarization state of the divided light L12 in the second expansion region 25 can vary from the original polarization state of the propagated light L11 due to diffraction of the divided duplication from the propagated light L11 to the divided light L12 in the first expansion region 23, propagation in the second expansion region 25, and the like. In the image display device 2 of the present embodiment, the polarization state in the second expansion region 25 may vary. Even if such variation is present, the problem of luminance unevenness in the image display device 2 can be solved by controlling the polarization state in the first expansion region 23.

### 2-2-1. Problem of Luminance Unevenness

According to the earnest research by the inventor of the present application, the fact causing the problem of the luminance unevenness has been revealed that the diffraction efficiency of obtaining the divided light L12 from the propagated light L11 varies as the polarization of the propagated light L11 is in an unstable state in the conventional pupil expansion type image display device. Therefore, the inventor of the present application has intensively studied to solve this problem, and has devised the image display device 2 capable of improving the luminance unevenness by stabilizing the polarization state of the propagated light L11. Such findings will be described below.

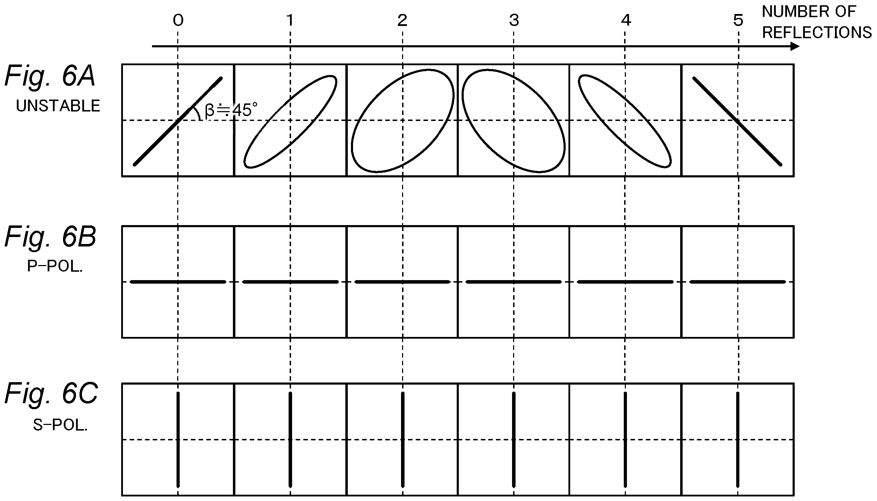

Figs. 6A to 6C are diagrams for explaining the stability of the polarization state of the propagated light L11 in the light guide 13. Figs. 6A to 6C illustrate polarization states of the propagated light L11 at various diffraction positions P1 (see Fig. 4) having different numbers of reflections in the first expansion region 23.

Fig. 6A illustrates a case where the polarization state of the propagated light L11 is unstable. For example, in a case where the polarization state of the original image light L1 is set to P-polarization, it is conceivable that the polarization state of the propagated light L11 becomes linear polarization with the polarization direction being rotated by a polarization angle β from P-polarization in an initial stage of propagation from the coupling region 21 to the first expansion region 23 (e.g., the number of reflections is 0).

Fig. 6A illustrates a case where the initial polarization angle β of the propagated light L11 is relatively large such as approximately 45°. In such a case, for example, as illustrated in Fig. 6A, the polarization state of the k2 propagated light L11 varies between linear polarization having the polarization angle β of approximately ±45° via elliptical polarization or the like every time Fresnel reflection is repeated during propagation of the first expansion region 23. Such an unstable polarization state may affect the diffraction efficiency from the propagated light L11 to the divided light L12 when the diffraction power is relatively large.

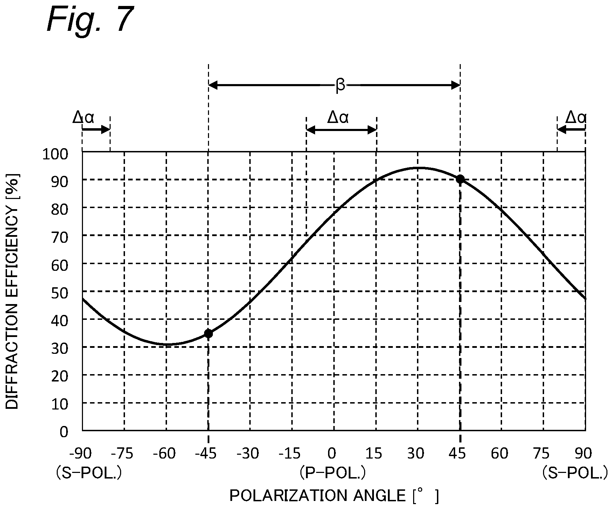

Fig. 7 is a graph illustrating a relation between the polarization state of the propagated light L11 and the diffraction efficiency at a certain diffraction position P1 of the first expansion region 23. In Fig. 7, the horizontal axis represents the polarization angle [°] of the propagated light L11, and the vertical axis represents the diffraction efficiency [%]. Fig. 7 illustrates a case where the incident angle θ1 of the propagated light L11 in the first expansion region 23 incident on the diffraction position P1 (see Fig. 4) is 47°.

In the example of Fig. 7, the diffraction efficiency at the polarization angle β = ±45° has a maximum value of approximately 90% and a minimum value of approximately 35%. Although design for controlling the magnitude of the diffraction efficiency may be taken for each location of the first expansion region 23, the ratio of the variation between the maximum value and the minimum value of the diffraction efficiency hardly changes. Therefore, in the case of Fig. 6A, the diffraction efficiency at the plurality of diffraction positions P1 in the first expansion region 23 varies over such a wide range. Thus, the problem may cause that the light amount varies among the plurality of beams of divided light L12 corresponding to each diffraction position P1, leading to luminance unevenness in which the image quality of the virtual image Iv is deteriorated.

### 2-2-2. Details of Polarization Control

In view of the above, the image display device 2 of the present embodiment sets the polarization state of the image light L1 to be shifted from the P-polarization or the S-polarization such that the propagated light L11 at the initial stage propagated to the first expansion region 23 is in the polarization state such as the P-polarization or the S-polarization, for example.

Fig. 6B illustrates an example of the polarization state of the propagated light L11 in the image display device 2 of the present embodiment. Fig. 6C illustrates another example of the polarization state of the propagated light L11 in the image display device 2 of the present embodiment.

Fig. 6B illustrates a case where the initial polarization state of the propagated light L11 in the first expansion region 23 is P-polarization. In this case, even if the reflection is repeated between the principal surfaces 13a and 13b of the light guide 13 during the propagation of the first expansion region 23, the polarization state of the k2 propagated light L11 remains stable as the P-polarization due to the characteristic of the light reflection as illustrated in Fig. 6B. The variation in diffraction efficiency at the various diffraction positions P1 (Fig. 4) in the first expansion region 23 can be suppressed by the stable polarization state of the k2 propagated light L11. For example, in the example of Fig. 7, a diffraction efficiency of approximately 80% is stably obtained over the plurality of beams of divided light L12 at the various diffraction positions P1.

Fig. 6C illustrates a case where the initial polarization state of the propagated light L11 in the first expansion region 23 is S-polarization. Also in this case, similarly to the case of the P-polarization, the polarization state of the propagated light L11 can be stabilized by the S-polarization with respect to the reflection during the propagation of the first expansion region 23, and the variation in diffraction efficiency can be suppressed. According to this, luminance unevenness due to variation in the light amount between the plurality of beams of divided light L12 can be reduced, and the variation in the image quality of the virtual image Iv can be suppressed.

A specific example of performing the polarization control in the image display device 2 of the present embodiment as described above will be exemplified below.

In the first example, by setting the polarization angle α (Fig. 5A) to "86°" as the polarization state of the image light L1 in the coupling region 21, the polarization angle of the propagated light L11 is "0°", that is, the polarization state of the P-polarization is obtained as the diffraction result in the coupling region 21. In this case, as a result of diffraction in the first expansion region 23, the polarization angle of the divided light L12 is "59°". Furthermore, as a result of diffraction in the second expansion region 25, the duplicated light L13 has a polarization state with a polarization angle within a range of "±59°".

In the second example, by setting the polarization angle α to "-24°" as the polarization state of the image light L1 in the coupling region 21, the polarization angle of the propagated light L11 is "90°", that is, the polarization state of the S-polarization is obtained. In this case, the polarization angle of the divided light L12 is "-6°". Furthermore, the duplicated light L13 has a polarization state with the polarization angle within a range of "±6°".

According to each of the above examples, the final polarization state of the duplicated light L13 has a polarization angle closer to the P-polarization in the second example than in the first example. In the HUD system 1, as the duplicated light L13 is emitted from the light guide 13 to the windshield 5, the first example, in which the polarization state of the propagated light L11 is P-polarization, is advantageous in consideration of a so-called Brewster's angle. In the image display device 2 of the present embodiment, the setting of the polarization state of the propagated light L11 can be appropriately selected according to various specifications.

In the image display device 2 of the present embodiment, the divided light L12 after diffraction of the propagated light L11 in the first expansion region 23 may be in a polarization state deviated from the P-polarization or the S-polarization in the second expansion region 25 (see Fig. 5C). In the present embodiment, as the diffraction power of the second expansion region 25 is weaker than the diffraction power of the first expansion region 23, the variation in the diffraction efficiency with respect to the change in the polarization state in the second expansion region 25 is smaller than the variation in the diffraction efficiency in the first expansion region 23. Therefore, by controlling the polarization state in the first expansion region 23, the image display device 2 of the present embodiment can reduce the luminance unevenness effectively without particularly controlling the polarization state in the second expansion region 25.

In the image display device 2 of the present embodiment, pupil expansion of the first expansion region 23 corresponds to the horizontal direction of the virtual image Iv, while pupil expansion of the second expansion region 25 corresponds to the vertical direction of the virtual image Iv. There may be a case where the observer D of the virtual image Iv senses the luminance unevenness more significantly in the horizontal direction than in the vertical direction. As to this, the image display device 2 of the present embodiment can effectively reduce the luminance unevenness that is easily sensed by the observer D by suppressing the variation in the diffraction efficiency in the first expansion region 23.

In the image display device 2 of the present embodiment, the polarization state of the propagated light L11 of the first expansion region 23 does not need to strictly match the P-polarization or the S-polarization, and may be set within an allowable error range. For example, even if the polarization state of the propagated light L11 is shifted from the P-polarization or the S-polarization by a polarization angle Δα at the initial stage of the first expansion region 23, the shift of the polarization state during the propagation of the first expansion region 23 falls within a range of a polarization angle ±Δα. An error may be allowed to the extent that the variation in the diffraction efficiency at this time is not sensed by the observer D as low image quality of the virtual image Iv.

For example, in Stevens' power law, a change in luminance is perceived by the third root. Therefore, when a change in brightness of about ±5% is allowed in the virtual image Iv of the HUD system 1, an error is about ±14% as a light amount. From such a viewpoint, the image display device 2 of the present embodiment may set the polarization state of the propagated light L11 such that the polarization angle Δα of the allowable error from the P-polarization falls within the range of -9° or more and +15° or less, as illustrated in Fig. 7 for example. Alternatively, the image display device 2 of the present embodiment may set the polarization state of the propagated light L11 set such that the polarization angle Δα of the allowable error from the S-polarization is within the range of -6° or more and +6° or less.

In the present embodiment, the polarization state of the propagated light L11 is not necessarily limited to linear polarization, and may be, for example, elliptical polarization or the like having a sufficiently small ellipticity. For example, elliptical polarization within a range that can vary from linear polarization due to repeated reflection within the range of the allowable error polarization angle Δα may be allowed (see Fig. 6A).

The polarization state of the propagated light L11 as described above can be set with reference to the plane of incidence (e.g., the XZ plane) of the propagated light L11 or the principal surfaces 13a and 13b (e.g., the XY plane) constituting the reflection surface corresponding to the plane of incidence. That is, the polarization state of the propagated light L11 in the image display device 2 of the present embodiment can be appropriately set within the range of the above-described allowable error that can be defined along the direction parallel or perpendicular to the XY plane, for example.

### 2-3. Simulation Results

The numerical simulation performed by the inventor of the present application on the image display device 2 of the present embodiment will be described below.

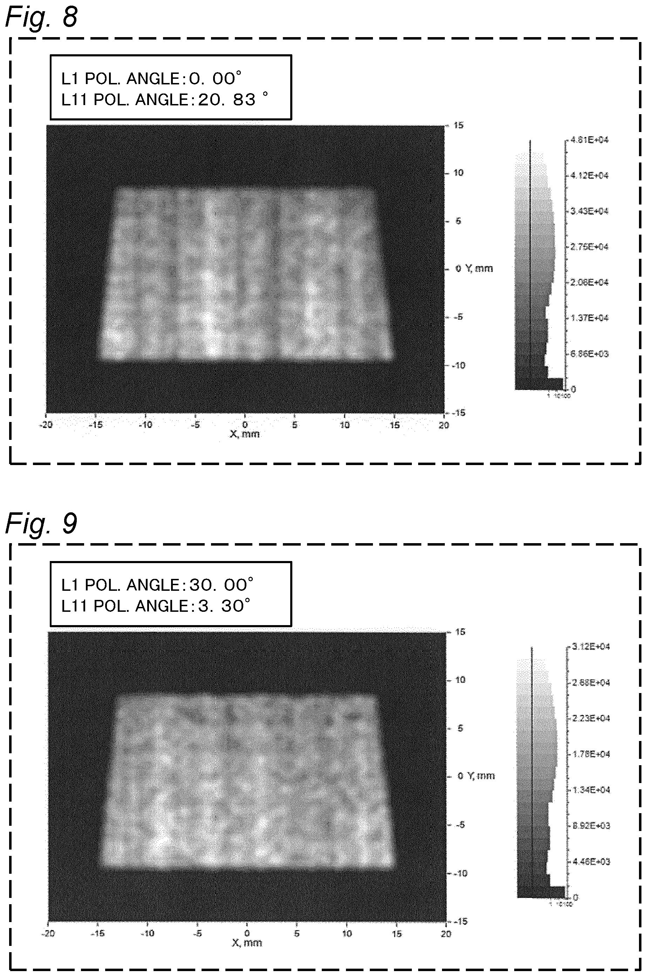

The simulation results performed by the inventor of the present application on the luminance unevenness caused by the polarization state of the propagated light L11 described above are illustrated in Figs. 8 to 11.

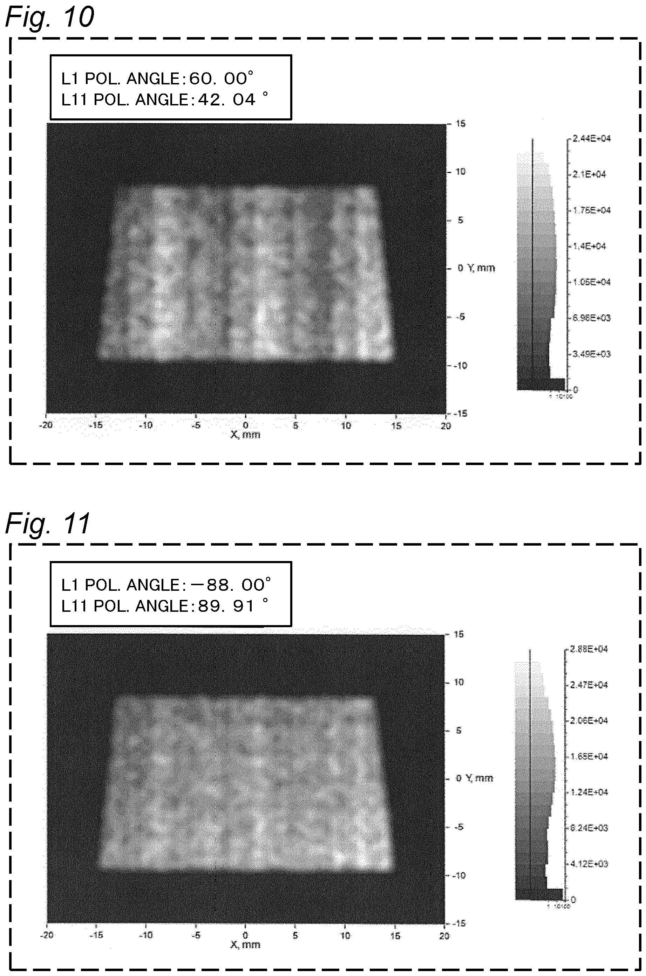

Fig. 8 illustrates an example of a simulation result in a case where the polarization state of the propagated light L11 is unstable. Fig. 9 illustrates an example of a simulation result in a case where the polarization state of the propagated light L11 is stable. Fig. 10 illustrates another example of a simulation result in a case where the polarization state of the propagated light L11 is unstable. Fig. 11 illustrates another example of a simulation result in a case where the polarization state of the propagated light L11 is stable.

In Figs. 8 to 11, setting differently the polarization angle of the image light L1 when entering the coupling region 21, numerical calculation is performed for the luminance distribution by the image light L2 after pupil expansion emitted from the light guide 13. The shading in each drawing represents the magnitude of luminance. The shading is lighter as the brightness is larger, and darker as the brightness is smaller. On the right side in each drawing, a histogram of the luminance in the luminance distribution on the left side is illustrated. In Figs. 8 to 11, the polarization angle is measured with reference to the S-polarization.

Fig. 8 illustrates a case where the image light L1 incident on the coupling region 21 is in S-polarization, that is, at a polarization angle "90.00 °" with respect to S-polarization. In this case, the initial polarization angle of the propagated light L11 in the first expansion region 23 is "20.83°". Therefore, the polarization state of the propagated light L11 deviates from the S-polarization or the like, and luminance unevenness is found in the luminance distribution in the X direction corresponding to the horizontal direction of the virtual image Iv as illustrated in Fig. 8.

In Fig. 9, as a setting example of the image display device 2 of the present embodiment, the polarization angle of the image light L1 is set to "30.00°". In this case, the initial polarization angle of the propagated light L11 is "3.30°", and the polarization state of the propagated light L11 is set near the S-polarization. As a result, as illustrated in Fig. 9, it can be verified that the luminance unevenness in the luminance distribution after pupil expansion is improved as compared with the case of Fig. 8.

Fig. 10 illustrates an example in which the polarization angle of the image light L1 incident on the coupling region 21 is "60.00°", and the initial polarization angle of the propagated light L11 is "42.04°". Also in this case, as the polarization state of the propagated light L11 is greatly different from both the P-polarization and the S-polarization, the luminance unevenness is found in the luminance distribution after pupil expansion as illustrated in Fig. 10. For example, the change in luminance is verified for about three cycles in the X direction.

In Fig. 11, as a setting example of the image display device 2 of the present embodiment, the polarization angle of the image light L1 is set to "-88.00°". In this case, the initial polarization angle of the propagated light L11 is "89.91°", and the polarization state of the propagated light L11 is set near the P-polarization. As a result, as illustrated in Fig. 11, it can be verified that the luminance unevenness in the luminance distribution after pupil expansion is improved as compared with the case of Fig. 10.

### 2-3-1. Diffraction Pitch

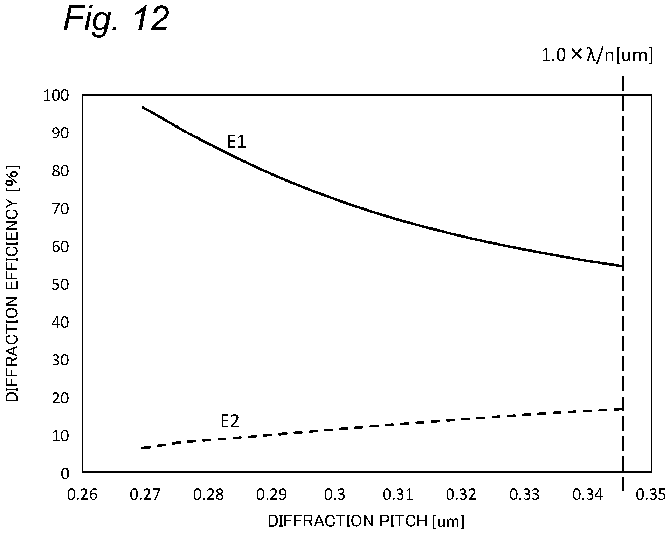

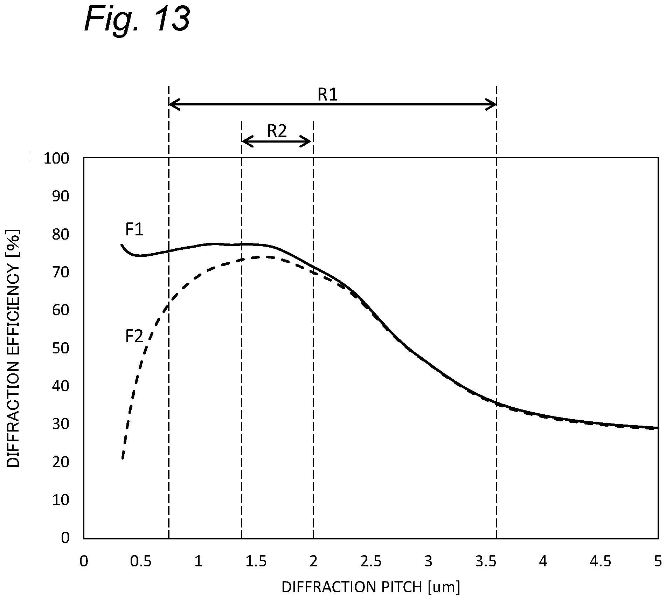

The diffraction pitch of the diffraction structure of the light guide 13 of the image display device 2 in the present embodiment verified by the inventor of the present application with numerical simulation will be described with reference to Figs. 12 and 13.

Fig. 12 illustrates a relation between the diffraction pitch Gp2 and the diffraction efficiency in the first expansion region 23. Fig. 12 is obtained resulting in a numerical simulation of diffraction efficiency for chaging the polarization state of the propagated light L11 with various diffraction pitches Gp2 being set in the first expansion region 23.

In the simulation of Fig. 12, the wavelength λ of the propagated light L11 is set to "0.52 µm", the thickness d between the principal surfaces 13a and 13b of the light guide 13 is set to "5 µm", the refractive index n of the hologram material is set to "1.505", and the refractive index modulation amount Δn of the hologram is set to "0.02". The relation between the incident angle and the emission angle at the diffraction position P1 of the first expansion region 23 is set such that the incident angle and the emission angle have the same magnitude and change according to the diffraction pitch Gp2 in the diffraction structure in which the traveling direction of the incident light is the X direction and the emission light is propagated in the Y direction.

In Fig. 12, the horizontal axis represents the diffraction pitch [µm], and the vertical axis represents the diffraction efficiency [%]. A graph E1 indicates the maximum value of the diffraction efficiency in the propagated light L11 in which the polarization state is changed. A graph E2 indicates the minimum value of the diffraction efficiency in the propagated light L11 in which the polarization state is changed.

In the first expansion region 23 of the present embodiment, it is conceivable to use the diffraction pitch Gp2 of 1.0 × λ/n [µm] or less from the viewpoint of obtaining relatively large diffraction power from the propagated light L11 propagating in the X direction to the divided light L12 propagating in the Y direction. Then, in the example of Fig. 12, a large deviation of the diffraction efficiency of 30% or more occurs between the graph E1 of the maximum value and the graph E2 of the minimum value of the diffraction efficiency when the polarization state of the propagated light L11 changes. As the diffraction pitch Gp2 is narrowed, the divergence of the diffraction efficiency increases.

In such a case, if the polarization state of the propagated light L11 in the first expansion region 23 is unstable, it were concerned about the occurrence of the luminance unevenness. In contrast to this, in the image display device 2 of the present embodiment, as the polarization state of the propagated light L11 in the first expansion region 23 is stabilized, the luminance unevenness can be reduced even if the narrow diffraction pitch Gp2 of 1.0 × λ/n [µm] or less is used. In the first expansion region 23, it is also possible to easily obtain larger diffraction power using the narrower diffraction pitch Gp2.

On the other hand, the second expansion region 25 of the present embodiment is sufficient with relatively small diffraction power enough to diffract the divided light L12 propagating in the Y direction in the light guide 13 into the duplicated light L13 emitted to the outside of the light guide 13 with inclined in the Y direction. Therefore, in the second expansion region 25 of the present embodiment, the diffraction pitch Gp3 wider than the diffraction pitch Gp2 of the first expansion region 23 can be used.

Fig. 13 illustrates a relation between the diffraction pitch Gp3 and the diffraction efficiency in the second expansion region 23. In Fig. 13, the same numerical simulation as in Fig. 12 is performed on the second expansion region 25.

In the simulation of Fig. 13, the wavelength λ of the divided light L12, the thickness d of the light guide 13, and the refractive index n of the hologram material are set in the same manner as in the case of Fig. 12, and the refractive index modulation amount Δn of the hologram is set to 0.03. The incident angle at the diffraction position P2 of the second expansion region 25 is set to "45°", and the emission angle is set to be smaller than the critical angle of the light guide 13 and to change according to the diffraction pitch Gp3 in the emission range. A graph F1 indicates the maximum value of the diffraction efficiency in the divided light L12 in which the polarization state is changed. A graph F2 indicates the minimum value of the diffraction efficiency in the divided light L12 in which the polarization state is changed.

According to the simulation result of Fig. 13, in the present embodiment, it can be verified that the diffraction pitch Gp3 of the second expansion region 25 can be set within the range R1 of 1.23 × λ/n [µm] or more and 10.0 × λ/n [µm] or less.

Specifically, at the lower limit value of the range R1 of the diffraction pitch Gp3, the graph F1 of the maximum value of the diffraction efficiency of the divided light L12 has the minimum value. Thus, when the graph F1 falls below the lower limit value, the variation in the diffraction efficiency due to the change in the polarization state becomes remarkable. In contrast to this, as the diffraction pitch Gp3 of the second expansion region 25 exceeds the lower limit value of the range R1, it is possible to reduce the variation in the diffraction efficiency with respect to the change in the polarization state of the divided light L12 in the second expansion region 25, and possible to suppress the deterioration in the image quality of the virtual image Iv.

Furthermore, in the range R1 of the diffraction pitch Gp3 of Fig. 13, the difference between the graph F1 of the maximum value and the graph F2 of the minimum value of the diffraction efficiency of the divided light L12 decreases as the diffraction pitch Gp3 increases. For example, when the diffraction pitch Gp3 is 2.4 µm or less, it is advantageous in that the variation in diffraction efficiency with respect to the change in the polarization state can be reduced to less than 1%.

On the other hand, each of the graphs F1 and F2 for the diffraction efficiency of the divided light L12 has a range R2 in which the diffraction pitch Gp3 has a peak value in the vicinity of 1.4 µm to 2.0 µm. That is, when the diffraction pitch Gp3 is widened beyond the peak range R2, the diffraction efficiency decreases regardless of the polarization state. In contrast to this, when the diffraction pitch Gp3 of the second expansion region 25 falls below the upper limit value of the range R1, the diffraction efficiency of the divided light L12 can be ensured to be half or more of the peak value.

### 3. Summary

As described above, the image display device 2 according to the present embodiment, i.e., the image display device 2 for making the virtual image Iv as an example of the optical image visible, includes the display 11 and the light guide 13. The display 11 emits the image light L1 that is visible as the virtual image Iv. The light guide 13 guides the image light L1 from the display 11 to the outside. The light guide 13 has a pair of principal surfaces 13a and 13b facing each other. In the light guide 13, the coupling region 21 as an example of an incident region and the first and second expansion regions 23 as examples of expansion regions are provided. In the coupling region 21, the image light L1 is diffracted such that the image light L1 from the display 11 enters and propagates inside the light guide 13 by reflection between the pair of principal surfaces 13a and 13b. The first expansion region 23 diffracts the propagated image light L11 at the plurality of positions P1 each where the image light is propagated in the light guide 13, to emit the diffracted image light as a plurality of beams of image light therefrom. The image light L1 incident on the coupling region 21 is set to a second polarization state different from a first polarization state such that the image light L11 propagated to the first expansion region 23 is in the vicinity of the P-polarization or the vicinity of the S-polarization as an example of a first polarization state in which the image light L11 is polarized along a direction parallel or perpendicular to a plane (XZ plane) including the normal direction (Z direction) of the principal surfaces 13a and 13b in the first expansion region 23 and the propagation direction (X direction) of the propagated light L11 (see Figs. 5A and 5B).

According to the image display device 2 described above, the polarization state of the propagated light L11 in the first expansion region 23 can be stabilized to reduce the variation in the diffraction efficiency and reduce the luminance unevenness. According to this, it is possible to suppress the variation in the image quality in the image display device 2 for causing the virtual image Iv to be visually recognized. The propagation direction of the propagated light L11 is defined by, for example, the light beam direction of the center light beam or the like in the light flux of the propagated light L11. In addition, the first polarization state may be specified from each of the principal surfaces 13a and 13b orthogonal to the above plane.

In the image display device 2 of the present embodiment, the coupling region 21 is provided such that the image light L1 enters at an inclination oblique to the normal direction (Z direction) of the principal surfaces 13a and 13b in the coupling region 21 and propagates inside the light guide 13. In accordance with such a change in the polarization state due to the obliquely incident image light L1, the polarization state of the image light L1 incident on the coupling region 21 can be set such that the image light L11 in the first expansion region 23 is in a specific polarization state, and the variation in the image quality in the image display device 2 can be suppressed.

In the image display device 2 of the present embodiment, the inclination, in which the image light L1 is incident in the coupling region 21, is inclined in the second direction (Y direction) intersecting the plane including the first direction (X direction) in which the plurality of positions P1 are arranged in the first expansion region 23 and the normal direction (Z direction) of the principal surfaces 13a and 13b. In this case, the plane of incidence of the image light L1 in the coupling region 21 is different from the plane of incidence of the propagated light L11 in the first expansion region 23 (see Fig. 4). In consideration of the deviation of the polarization state of the propagated light L11 from the polarization state of the image light L1 due to such a difference in the plane of incidence, the luminance unevenness in the image display device 2 can be reduced.

In the image display device 2 of the present embodiment, the expansion region includes the first and second expansion regions 23 and 25 having the diffraction pitches Gp2 and Gp3 different from each other. The diffraction pitch Gp2 of the first expansion region 23 is narrower than the diffraction pitch Gp3 of the second expansion region 25. The image light L1 incident on the coupling region 21 is set to the second polarization state such that the image light L11 propagated to the first expansion region 23 is in the first polarization state. According to this, the polarization state in the first expansion region 23 having the larger diffraction power among the plurality of expansion regions 23 and 25 can be stabilized to suppress the variation in the diffraction efficiency, and it can be facilitated to suppress variation in the image quality of the virtual image Iv due to the luminance unevenness.

In the image display device 2 of the present embodiment, the first expansion region 23 is provided in the light guide 13 so as to diffract the image light L11 propagated from the coupling region 21 and emit the plurality of beams of image light L12 to the second expansion region 25. By stabilizing the polarization state in the first expansion region 23 close to the coupling region 21 among the plurality of expansion regions 23 and 25, it can be facilitated to suppress the variation in the image quality of the virtual image Iv due to the luminance unevenness.

In the image display device 2 of the present embodiment, the diffraction pitch Gp3 in the second expansion region 25 is 1.23 × λ/n or more and 10.0 × λ/n or less using the wavelength λ of the image light L1 and the refractive index n in the light guide 13. According to the relatively wide diffraction pitch Gp3, even if the polarization state in the second expansion region 25 is unstable, the variation in the diffraction efficiency can be suppressed, and the image quality in the image display device 2 can be improved.

In the image display device 2 of the present embodiment, the first polarization state includes at least one of P-polarization and S-polarization. The first polarization state may not strictly coincide with the P-polarization and the S-polarization, and can be appropriately set within a range of allowable error. Using such a first polarization state, it is possible to suppress the variation in the image quality in the image display device 2.

In the image display device 2 of the present embodiment, the second polarization state has the polarization angle α obtained by rotating the polarization direction from the P-polarization or the S-polarization. The second polarization state is a polarization state different from the P-polarization and the S-polarization. For example, the second polarization state is linear polarization different from the P-polarization and the S-polarization. The second polarization state can also be appropriately set within a range of allowable error. By setting such a second polarization state, it is possible to suppress the variation in the image quality in the image display device 2. In addition, the second polarization state may be circular polarization or elliptical polarization.

In the present embodiment, the image display device 2 may further include the polarization adjuster 14. The polarization adjuster 14 is arranged between the display 11 and the light guide 13, and sets the image light L1 incident on the coupling region 21 from the display 11 to the second polarization state. By setting the second polarization state by the polarization adjuster 14, it is possible to suppress the variation in the image quality in the image display device 2. The polarization adjuster 14 includes, for example, at least one of a half-wave plate, a 1/4 wave plate, and a polarizing plate.

In the image display device 2 of the present embodiment, the display 11 may be arranged such that the display 11 emits the image light to the light guide 13 in the second polarization state. With such an arrangement of the display 11, it is also possible to suppress the variation in the image quality in the image display device 2 by setting the second polarization state.

In the image display device 2 of the present embodiment, the light guide 13 is arranged so as to guide the image light from the display 11 to the light-transmitting member. The image display device 2 constitutes a head-up display that displays the virtual image Iv via a light-transmitting member such as the windshield 5 in the HUD system 1. The image display device 2 of the present embodiment can suppress the variation in the image quality of the virtual image Iv in the HUD system 1.

The optical system 20 of the present embodiment includes the light guide 13 and the polarization adjuster 14. The light guide 13 guides the image light L1 from the display 11 that emits the image light L1 that can be visually recognized as the virtual image Iv to the outside. The polarization adjuster 14 is arranged between the display 11 and the light guide 13. The light guide 13 has a pair of principal surfaces 13a and 13b facing each other. In the light guide 13, there are provided the incident region that diffracts the image light such that the image light from the display 11 is incident and propagates inside the light guide 13 by reflection between the pair of principal surfaces, and the expansion region that diffracts the propagated image light at a plurality of positions where the image light propagates in the light guide 13 and emits the diffracted image light as a plurality of beams of image light. The polarization adjuster 14 sets the image light incident on the incident region to the second polarization state different from the first polarization state such that the image light propagated to the expansion region is in the first polarization state polarized along a direction parallel or perpendicular to a plane including the normal direction of the principal surface in the expansion region and the propagation direction of the propagated image light. According to the optical system 20 of the present embodiment, the polarization state of the image light propagating to the expansion region can be stabilized to reduce the variation in the diffraction efficiency, the luminance unevenness can be reduced, and the variation in the image quality of the virtual image Iv can be suppressed.

### (Other Embodiments)

As described above, the first embodiment has been described as an example of the technology disclosed in the present application. However, the technology in the present disclosure is not limited to this, and is applicable to embodiments in which changes, replacements, additions, omissions, and the like are appropriately made. In addition, it is also possible to combine each component described in each of the above-described embodiments to form a new embodiment. Thus, in the following, other embodiments will be exemplified.

In the first embodiment described above, the configuration example in which the first expansion region 23 is arranged on the +X side of the coupling region 21 and the second expansion region 25 is arranged on the +Y side of the first expansion region 23 in the light guide 13 has been described. In the light guide 13 of the present embodiment, the arrangement of the regions 21, 23, and 25 is not limited to the above configuration example, and for example, the first expansion region 23 may be arranged on the +Y side of the coupling region 21, and the second expansion region 25 may be arranged on the +X side of the first expansion region 23. In the image display device 2 of the present embodiment, polarization control may be performed to stabilize the polarization state of the image light propagated to the side with the narrower diffraction pitch among the two expansion regions 23 and 25 arranged as described above.

In the above embodiments, an example in which two expansion regions are provided in the light guide 13 has been described. In the present embodiment, the number of expansion regions provided in the light guide 13 is not limited to two, and may be one or three or more.

In the above embodiments, the image display device 2 in which the image light L1 incident on the light guide 13 and the image light L2 emitted from the light guide 13 are inclined in the Y direction with respect to the normal line of the light guide 13 has been described. In the image display device 2 of the present embodiment, the beams of image light L1 and L2 may not be inclined as described above, and may be inclined in a direction different from the Y direction, for example. One or both of the beams of image light L1 and L2 may be parallel to the normal of the light guide 13.

Although the HUD system 1 applied to the vehicle 3 has been described in the above embodiments, the object to which the HUD system 1 is applied is not limited to the vehicle 3 in the present embodiment. For example, the object of the HUD system 1 in the present embodiment may be various moving bodies such as a train, a motorcycle, a ship, and an aircraft, or may be an amusement machine without a moving body. The image display device 2 of the present embodiment may be arranged so as to emit the image light L2 to a light-transmitting member provided on various objects in the HUD system 1.

In the above embodiments, the image display device 2 and the optical system 20 for visually recognizing the virtual image Iv have been described as an example of the optical image. In the present embodiment, the optical image visually recognized by the image display device 2 is not limited to the virtual image Iv, and may be, for example, a real image. For example, the image display device 2 of the present embodiment may be configured such that the real image is formed between the observer D and the light-transmitting member such as the windshield 5 by the pupil expansion type optical system 20 similar to that described above. Such display of a real image is useful, for example, in amusement applications. Even in a case where such a real image is visually recognized as an optical image, similarly to the case of the virtual image Iv described above, the influence of the polarized light in the light guide 13 is considered for the luminance unevenness. According to the image display device 2 and the optical system 20 of the present embodiment, it is possible to suppress the variation in the image quality of the real image by suppressing the luminance unevenness by controlling the polarization state similarly to the above-described embodiments.

Although the image display device 2 included in the HUD system 1 has been described in the above embodiments, the image display device 2 may not be included in the HUD system 1 in the present embodiment. In the present embodiment, the image display device 2 may be various image display devices that allow visual recognition of an optical image such as a virtual image or a real image such as an HMD or an electronic mirror.

As described above, the embodiments are described as the exemplification of the technique in the present disclosure. To that end, the accompanying drawings and the detailed description are provided.

Therefore, among the components described in the accompanying drawings and the detailed description, not only the component essential for solving the problem, but also the component not essential for solving the problem may be included in order to exemplify the above technique. Therefore, it should not be recognized that these non-essential components are essential immediately because these non-essential components are described in the accompanying drawings and the detailed description.

Further, the above-described embodiments are provided to show the technology in the present disclosure, and hence it is possible to make various changes, replacements, additions, omissions, and the like within the scope of claims or the equivalent thereof.

### (Summary of Aspects)

Hereinafter, various aspects according to the present disclosure will be listed.

A first aspect according to the present disclosure is an image display device for causing an optical image to be visible, the image display device including: a display configured to emit image light visible as the optical image; and a light guide configured to guide the image light from the display to an outside. The light guide has a pair of principal surfaces facing each other. The light guide includes: an incident region configured to diffract the image light to propagate inside the light guide by reflection between the pair of principal surfaces, in response to incidence of the image light from the display; and an expansion region configured to diffract the propagated image light to emit the diffracted image light as a plurality of beams of image light from a plurality of positions each where the image light propagates in the light guide. The image light propagated to the expansion region has a first polarization state by setting the image light incident on the incident region to have a second polarization state, the first polarization state being polarized along a direction parallel or perpendicular to a plane including a normal direction of the principal surface in the expansion region and a propagation direction of the propagated image light, the second polarization state being different from the first polarization state.

**In a** second aspect, in the image display device according to the first aspect, the incident region is provided for the image light to be incident at an inclination oblique to the normal direction of the principal surface in the incident region and to propagate inside the light guide.

**In a** third aspect, in the image display device according to the second aspect, with respect to a reference plane including a first direction in which the plurality of positions are arranged in the expansion region and the normal direction of the principal surface, the inclination at which the image light is incident on the incident region is inclined to a second direction intersecting the reference plane.

**In** a fourth aspect, in the image display device according to any one of the first to third aspects, the expansion region includes first and second expansion regions having different diffraction pitches from each other. The diffraction pitch of the first expansion region is narrower than the diffraction pitch of the second expansion region. The image light incident on the incident region is set to the second polarization state with the image light propagated to the first expansion region having the first polarization state.

In a fifth aspect, in the image display device of the fourth aspect, the first expansion region is provided in the light guide to diffract the image light propagated from the incident region to emit the plurality of beams of image light into the second expansion region.

In a sixth aspect, in the image display device according to the fourth or fifth aspect, the diffraction pitch in the second expansion region is 1.23 × λ/n or more and 10.0 × λ/n or less, based on a wavelength λ of the image light and a refractive index n in the light guide.

In a seventh aspect, in the image display device according to any one of the first to sixth aspects, the first polarization state includes one of P-polarization or S-polarization.

In an eighth aspect, in the image display device according to any one of the first to seventh aspects, the second polarization state is polarization different from the P-polarization and the S-polarization, with a polarization angle obtained by rotating a polarization direction from the P-polarization or the S-polarization.

In a ninth aspect, the image display device according to any one of the first to eighth aspects further includes a polarization adjuster arranged between the display and the light guide, and configured to set the image light incident on the incident region from the display to have the second polarization state.

In a tenth aspect, in the image display device according to the ninth aspect, the polarization adjuster includes at least one of a half-wave plate, a 1/4 wave plate, or a polarizing plate.

In an eleventh aspect, in the image display device according to any one of the first to ninth aspects, the display is arranged to emit the image light to the light guide with the second polarization state.

In a twelfth aspect, in the image display device according to any one of the first to eleventh aspects, the light guide is arranged to guide the image light from the display to a light-transmitting member, and the image display device is a head-up display configured to display the virtual image through the light-transmitting member.

A thirteenth aspect is an optical system including: a light guide configured to guide image light from a display to an outside, the display configured to emit image light visible as the optical image; and a polarization adjuster arranged between the display and the light guide. The light guide has a pair of principal surfaces facing each other. The light guide includes: an incident region configured to diffract the image light to propagate inside the light guide by reflection between the pair of principal surfaces, in response to incidence of the image light from the display; and an expansion region configured to diffract the propagated image light to emit the diffracted image light as a plurality of beams of image light from a plurality of positions each where the image light propagates in the light guide. The polarization adjuster is configured to cause the image light propagated to the expansion region to have a first polarization state by setting the image light incident on the incident region to have a second polarization state, the first polarization state being polarized along a direction parallel or perpendicular to a plane including a normal direction of a principal surface in the expansion region and a propagation direction of the propagated image light, the second polarization state being different from the first polarization state.

In a fourteenth aspect, the optical system according to the thirteenth aspect has any one of the features according to the second to tenth aspects.

### INDUSTRIAL APPLICABILITY

The present disclosure is applicable to an image display device that allows an observer to visually recognize an optical image, and is applicable to, for example, a HUD, an HMD, an electronic mirror, and the like.

## Claims

1. An image display device for causing an optical image to be visible, the image display device comprising:
a display configured to emit image light visible as the optical image; and
a light guide configured to guide the image light from the display to an outside thereof, wherein
the light guide has a pair of principal surfaces facing each other,
the light guide includes:
an incident region configured to diffract the image light to propagate inside the light guide by reflection between the pair of principal surfaces, in response to incidence of the image light from the display; and
an expansion region configured to diffract the propagated image light to emit the diffracted image light as a plurality of beams of image light from a plurality of positions each where the image light propagates in the light guide, and
the image light propagated to the expansion region has a first polarization state by setting the image light incident on the incident region to have a second polarization state, the first polarization state being polarized along a direction parallel or perpendicular to a plane including a normal direction of the principal surfaces in the expansion region and a propagation direction of the propagated image light, the second polarization state being different from the first polarization state.

2. The image display device according to claim 1, wherein the incident region is provided for the image light to be incident at an inclination oblique to the normal direction of the principal surfaces in the incident region and to propagate inside the light guide.

3. The image display device according to claim 2, wherein with respect to a reference plane including a first direction in which the plurality of positions are arranged in the expansion region and the normal direction of the principal surfaces, the inclination at which the image light is incident on the incident region is inclined to a second direction intersecting the reference plane.

4. The image display device according to any one of claims 1 to 3, wherein
the expansion region includes first and second expansion regions having different diffraction pitches from each other,
the diffraction pitch of the first expansion region is narrower than the diffraction pitch of the second expansion region, and
the image light incident on the incident region is set to the second polarization state with the image light propagated to the first expansion region having the first polarization state.

5. The image display device according to claim 4, wherein the first expansion region is provided in the light guide to diffract the image light propagated from the incident region to emit the plurality of beams of image light into the second expansion region.

6. The image display device according to claim 4, wherein based on a wavelength λ of the image light and a refractive index n in the light guide, the diffraction pitch in the second expansion region is 1.23 × λ/n or more and 10.0 × λ/n or less.

7. The image display device according to any one of claims 1 to 3, wherein the first polarization state includes one of P-polarization or S-polarization.

8. The image display device according to any one of claims 1 to 3, wherein the second polarization state is polarization different from P-polarization and S-polarization, with a polarization angle obtained by rotating a polarization direction from the P-polarization or the S-polarization.

9. The image display device according to any one of claims 1 to 3, further comprising a polarization adjuster arranged between the display and the light guide and configured to set the image light incident on the incident region from the display to have the second polarization state.

10. The image display device according to claim 9, wherein the polarization adjuster includes at least one of a half-wave plate, a 1/4 wave plate, or a polarizing plate.

11. The image display device according to any one of claim 1 to 3, wherein the display is arranged to emit the image light to the light guide with the second polarization state.

12. The image display device according to any one of claims 1 to 3, wherein the light guide is arranged to guide the image light from the display to a light-transmitting member, and the image display device is a head-up display configured to display the virtual image through the light-transmitting member.

13. An optical system comprising:
a light guide configured to guide image light from a display to an outside thereof, the display configured to emit the image light visible as an optical image; and
a polarization adjuster arranged between the display and the light guide, wherein
the light guide has a pair of principal surfaces facing each other,
the light guide includes:
an incident region configured to diffract the image light to propagate inside the light guide by reflection between the pair of principal surfaces, in response to incidence of the image light from the display; and
an expansion region configured to diffract the propagated image light to emit the diffracted image light as a plurality of beams of image light from a plurality of positions each where the image light propagates in the light guide, and
the polarization adjuster is configured to cause the image light propagated to the expansion region to have a first polarization state by setting the image light incident on the incident region to have a second polarization state, the first polarization state being polarized along a direction parallel or perpendicular to a plane including a normal direction of a principal surface in the expansion region and a propagation direction of the propagated image light, the second polarization state being different from the first polarization state.
